# EUROPÄISCHE PATENTSCHRIFT

(11) **EP 1 239 172 B1**
(45) Veröffentlichungstag und Bekanntmachung des Hinweises auf die Patenterteilung: **11.08.2004**
(21) Anmeldenummer: 02090084.1
(22) Anmeldetag: 01.03.2002
(51) Int. Cl.: F16C 19/30, B66C 23/84

(54) **Grossdrehlagerung mit Wälzkörpern**
Big rotating bearing with rolling elements
Palier rotatif grand avec d' éléments de roulement

(30) Priorität: 09.03.2001 DE 10112517
(43) Veröffentlichungstag der Anmeldung: 11.09.2002
(73) Patentinhaber: Terex-Demag GmbH & Co. KG, 66482 Zweibrücken (DE)
(72) Erfinder: Stowasser, Walter, Dipl.-Ing., 66482 Zweibrücken (DE)
(74) Vertreter: Meissner, Peter E., Dipl.-Ing.

(56) Entgegenhaltungen:
- DE-A- 1 575 433
- FR-A- 2 749 358
- US-A- 4 413 866
- US-A- 4 861 171
- US-A- 5 664 692

## Beschreibung

Die Erfindung betrifft eine Großdrehlagerung mit Wälzkörpern gemäß dem Gattungsbegriff des Patentanspruchs 1.

Großdrehlager der gattungsgemäßen Art sind seit vielen Jahren bekannt und als Standardbauteile beziehbar. Sie dienen zur Verbindung von großen Baugruppen, die gegeneinander verdrehbar sein sollen. Typische Anwendungen sind in der Verbindung von Ober- und Unterwagen von Mobilkranen, Baggern, Turmdrehkranen oder Ladekranen zu sehen. Auch an Betonmischfahrzeugen oder ähnlichen Großgeräten werden solche Lagerungen benötigt, die hohe Axiallasten und Lastmomente quer zur Lagerachse aufnehmen können.

Aus der Firmenbroschüre "Rothe Erde Large-Diameter Antifriction Bearings (Hoesch Rothe Erde GmbH, 8.97/2.0, Seite 161)" ist ein für derartige Anwendungen geeignetes Standard-Großdrehlager bekannt.

Dieses Großdrehlager weist ein erstes und ein zweites Lagerteil auf, die jeweils mit kreisförmig umlaufenden Lagerflächen für zwei Reihen von zylindrischen Wälzkörpern mit horizontaler Rotationsachse versehen sind, wobei sich die Laufflächen an den beiden Lagerteilen jeweils zu Laufflächenpaaren ergänzen. An dem ersten Lagerteil befinden sich die beiden Laufflächen für die beiden Reihen von Wälzkörpem jeweils an der Oberseite bzw. an der Unterseite eines Tragrings, der aus der Kontur des ringförmig ausgebildeten Grundkörpers des ersten Lagerteils vorspringt. Auf der gegenüberliegenden Seite des Querschnitts dieses Grundkörpers weist das erste Lagerteil eine umlaufende Verzahnung auf, die für den Drehantrieb dieses ersten Lagerteils vorgesehen ist. Dieses Standardlager ist in zwei Versionen erhältlich, nämlich mit Innenverzahnung oder mit Außenverzahnung, so dass der Tragring entweder radial außen oder radial innen am Grundkörper des ersten Lagerteils angeordnet ist. Das zweite Lagerteil ist horizontal, d.h. quer zur Lagerachse geteilt ausgeführt und besteht aus einem ringförmigen Oberteil und einem ringförmigen Unterteil. Zur Ausbildung von Laufflächen für die Wälzkörper sind Ober- und Unterteil jeweils mit ringförmig umlaufenden Ausnehmungen versehen, die im zusammengesetzten Zustand von Ober- und Unterteil des zweiten Lagerteils den Tragring des ersten Lagerteils mit vertikalem Abstand umgreifen. Der vertikale Abstand entspricht jeweils dem Durchmesser der Wälzkörper, die jeweils zwischen den Laufflächen eines Laufflächenpaars angeordnet sind. Über diese Wälzkörper können Kräfte, die in Richtung der vertikalen Lagerachse (nach oben oder unten) wirken, sicher übertragen werden. Zur Aufnahme radialer Kräfte, deren Größe wesentlich geringer ist als die der zu erwartenden vertikalen Kräfte, ist eine dritte Reihe von Wälzkörpem vorgesehen, die eine vertikale Rotationsachse aufweisen und als radiale Führungsrollen zu bezeichnen sind. Diese Führungsrollen stützen sich auf zylindermantelförmigen Lagerflächen ab, die jeweils stirnseitig im Bereich des umlaufenden Tragrings bzw. am Oberteil des zweiten Lagerteils eingearbeitet sind. Um die beiden Lagerteile mit den Baugruppen des jeweiligen Großgeräts, die gegeneinander verdrehbar gelagert sein sollen, verbinden zu können, sind eine Vielzahl von Durchgangsbohrungen parallel zur Lagerachse an den beiden Lagerteilen vorgesehen. Diese Durchgangsbohrungen sind zur Aufnahme von Schrauben bestimmt, mit denen die Lagerteile jeweils fest beispielsweise mit dem Oberwagen bzw. mit dem Unterwagen eines Mobilkrans verbunden werden. Durch die Schrauben am zweiten Lagerteil werden das Ober- und Unterteil sicher zusammengehalten. Die zweiteilige Ausführung des zweiten Lagerteils ist notwendig, um die Wälzkörper in den Zwischenraum des jeweils zugehörigen Laufflächenpaars einbringen zu können.

Aus der US 5 664 692 ist ein Mobilkran bekannt, bei dem der Oberwagen mit dem Unterwagen durch ein solches Lager verbunden ist. Zusätzlich ist dort allerdings auch das erste Lagerteil horizontal geteilt ausgeführt, wobei beide Teile im Sinne einer Schnellkupplung über eine bajonettverschlussartige Verbindung miteinander koppelbar sind.

Die beiden Teilungskreise für die Anordnung der Schrauben zur Befestigung der beiden Lagerteile weisen einen deutlichen Durchmesserunterschied auf, damit die Schraubenköpfe bzw. die zugehörigen Muttern und die erforderlichen Dichtungen zum Schutz der Wälzkörper störungsfrei untergebracht werden können. Im Bereich zwischen den beiden Teilungskreisen sind die Wälzkörper zur Übertragung der vertikalen und auch der radialen Kräfte angeordnet. Bei der Übertragung insbesondere der von oben nach unten (also unter Einschluss des Gewichts z.B. des Oberwagens eines Mobilkrans) wirkenden Vertikalkräfte treten im Bereich des Tragrings erhebliche Biegemomente auf. Um diese sicher zu beherrschen, ist eine massive Ausführung des Drehlagers notwendig. Wegen der großen Durchmesser eines solchen Lagers führt dies zu beträchtlichen Lagergewichten, die einen entsprechenden Anteil am zulässigen Gesamtgewicht beispielsweise eines Mobilkrans in Anspruch nehmen.

Aus der US 4 861 171 A ist eine Grossdrehlagerung bekannt, bei der sich Wälzkörper zwischen einem ersten Lagerteil und einem zweiten relativ dazu drehbaren Lagerteil befinden, die jeweils mit einer ersten bzw. einer zweiten Baugruppe eines Grossgerätes verbunden oder verbindbar sind, wobei an beiden Lagerteilen jeweils kreisförmig umlaufende Lagerflächen, die sich jeweils zu Laufflächenpaaren ergänzen, für mindestens zwei Reihen von Wälzkörpern vorgesehen sind, über die parallel zur Lagerachse gerichtete Kräfte übertragbar sind.

Aufgabe der vorliegenden Erfindung ist es, eine Großdrehlagerung mit Wälzkörpern der gattungsgemäßen Art dahingehend zu verbessern, dass das Eigengewicht des Großdrehlagers bei gleichbleibender Tragfähigkeit deutlich vermindert wird.

Gelöst wird diese Aufgabe erfindungsgemäß durch die im kennzeichnenden Teil des Patentanspruchs 1 angegebenen Merkmale. Vorteilhafte Weiterbildungen der Erfindung ergeben sich aus den Unteransprüchen.

Die vorliegende Erfindung macht sich den Umstand zunutze, dass die durch ein Großdrehlager der gattungsgemäßen Art zu übertragenden Axiallasten in den beiden Richtungen parallel zur Lagerachse im Allgemeinen ungleich groß sind. Für die Übertragung der größeren Axiallast (bei einem Mobilkran also die das Oberwagengewicht einschließende von oben nach unten wirkende Vertikallast) wird bewusst eine Anordnung mit einem günstigeren Kraftfluss gewählt als für die Übertragung der umgekehrt verlaufenden Vertikalkräfte. Hierzu sieht die Erfindung zur Verbindung zweier gegeneinander drehbarer Baugruppen vor, dass - im Längsschnitt durch die Lagerachse gesehen - die erste Krafteinleitungsstelle zwischen der ersten Baugruppe und dem ersten Lagerteil der Großdrehlagerung auf der einen Seite und eine zweite Krafteinleitungsstelle zwischen dem zweiten Lagerteil und der zweiten Baugruppe andererseits sowie das Laufflächenpaar einer der beiden Reihen von Wälzkörpern im Wesentlichen auf einer geraden Kraftflusslinie parallel zur Lagerachse liegen. Die Übertragung der vertikal von oben nach unten wirkenden Kräfte erfolgt dabei also ohne wesentliche Umlenkungen des Kraftflusses und somit ohne die Entstehung wesentlicher Biegemomente in den zur Kraftübertragung dienenden Teile der Großdrehlagerung. Weiterhin ist vorgesehen, dass das geteilt ausgeführte Lagerteil aus einem Lastring und einem Klammerring besteht, wobei der Lastring die erste Krafteinleitungsstelle und eine der beiden Laufflächen für die zur Übertragung der von oben nach unten wirkenden Vertikalkräfte auf das zweite Lagerteil vorgesehenen Wälzkörper aufweist. Der Klammerring verbindet das zweite Lagerteil formschlüssig mit dem Lastring des ersten Lagerteils, wobei eine der Laufflächen des Laufflächenpaars für die Wälzkörper, die zur Übertragung der umgekehrten, also von unten nach oben wirkenden Vertikalkräfte vorgesehen sind, an dem Klammerring angeordnet ist. Dabei ist der Klammerring im axialen Längsschnitt mit einem im Wesentlichen C-förmigen Profil gestaltet, das massiv ausgeführt ist, um die anfallenden Lasten ohne wesentliche Biegeverformung übertragen zu können.

Vorzugsweise wird die Befestigung des Lastrings an der ersten Baugruppe und/oder des zweiten Lagerteils an der zweiten Baugruppe als Schweißverbindung ausgeführt. Dadurch ergibt sich eine besonders platzsparende Konstruktion, da der Bauraum für die Schraubverbindungen entfällt.

Um eine Montage der Teile der Großdrehlagerung zu ermöglichen, ist es erforderlich, einzelne Teile geteilt auszuführen. Besonders zweckmäßig ist es, den Klammerring zu teilen, insbesondere den Klammerring aus Segmenten zusammenzusetzen.

Im Hinblick auf die Gestaltung der Wälzkörper sind zylindrische oder leicht kegelstumpfförmig ausgebildete Wälzkörper gegenüber beispielsweise tonnen- oder kugelförmigen Wälzkörpem bevorzugt.

Besonders zweckmäßig ist es, die Laufflächen für die Wälzkörper durch eingelegte gehärtete ringförmige Leisten zu gestalten. Gehärtete Laufflächen sind zur Verschleißminderung unbedingt notwendig. Eine Härtebehandlung an einem großen Bauteil, wie dies bei einer Großdrehlagerung vorliegt, ist jedoch sehr aufwendig und kostenintensiv. Daher empfiehlt sich die Verwendung separater Bauteile für die Laufflächen. Zweckmäßig werden die gehärteten Leisten in Segmenten gefertigt, die dann zu einem umlaufenden Ring zusammengesetzt werden.

Die umlaufenden Lagerflächen zur Übertragung der radialen Kräfte können in Form eines radialen Gleitlagers ausgebildet sein. Es ist aber selbstverständlich auch möglich, in der bisher üblichen Weise zwischen den umlaufenden Lagerflächen Wälzkörper als radiale Führungsrollen mit vertikaler Rotationsachse anzuordnen. Vorteilhaft wird dabei eine der umlaufenden Lagerflächen für die Übertragung der radialen Kräfte an dem Klammerring ausgebildet. Grundsätzlich könnte aber diese Lagerfläche auch an dem unmittelbar mit der ersten Baugruppe verbundenen Lastring des ersten Lagerteils angeordnet sein.

Die Kontaktfläche zur Herstellung des Formschlusses zwischen dem Klammerring und dem Lastring wird zweckmäßig - im axialen Längsschnitt gesehen - leicht schräg zur Lagerachse geneigt ausgebildet. Es handelt sich also dann um eine kegelstumpfförmige Mantelfläche, wobei der Kegelstumpf einen sehr großen spitzen Winkel aufweist. Im axialen Längsschnitt weist die Kontaktfläche somit einen vorzugsweise geringfügig von 90° abweichenden Winkel zur Lagerachse auf. Vorzugsweise ist der Klammerring radial innenliegend angeordnet, wenngleich auch eine radial außen liegende Anordnung möglich ist.

Zweckmäßig wird einer der beiden Lagerteile mit einer Außenverzahnung oder Innenverzahnung für den Antrieb durch ein Zahnritzel oder eine Schnecke versehen.

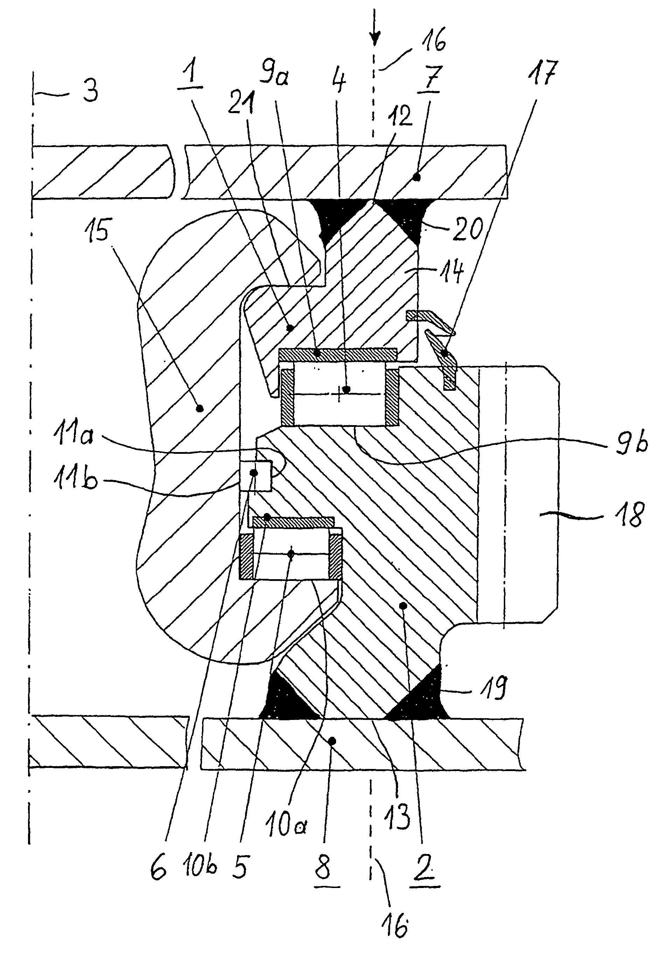

Nachfolgend wird die Erfindung anhand des in der einzigen Figur dargestellten schematischen Ausführungsbeispiels näher erläutert.

Die Figur zeigt eine Großdrehlagerung beispielsweise zwischen dem eine erste Baugruppe 7 bildenden Oberwagen und dem eine zweite Baugruppe 8 bildenden Unterwagen eines nicht näher dargestellten Mobilkrans. Die Lagerachse 3 verläuft vertikal. Das Großdrehlager weist ein erstes Lagerteil 1 und ein zweites Lagerteil 2 auf, die gegeneinander verdrehbar sind. Das erste Lagerteil 1 ist zweiteilig ausgeführt und besteht aus einem Lastring 14, der durch Schweißverbindungen 20 fest mit der ersten Baugruppe 7 verbunden ist, sowie einem Klammerring 15, der massiv ausgeführt ist und im Querschnitt etwa die Form eines "C" aufweist. Das zweite Lagerteil 2 ist über Schweißverbindungen 19 fest mit der zweiten Baugruppe 8 verbunden. Außerdem ist das zweite Lagerteil 2 mit einer radial außen liegenden Verzahnung 18 für einen Drehantrieb versehen. Zwischen dem Lastring 14 des ersten Lagerteils 1 und dem zweiten Lagerteil 2 ist eine Reihe von zylindrischen Wälzkörpern 4 angeordnet, die sich auf Laufflächen 9 a, 9 b abstützen, die vorzugsweise in Form von segmentweise zusammengesetzten gehärteten Leisten (9a) gebildet sind. Über die Wälzkörper 4 und das zweite Lagerteil 2 können die vertikal von oben nach unten aus der Baugruppe 7 in den Lastring 14 abgeleiteten Kräfte in die zweite Baugruppe 8 übertragen werden. Man erkennt, dass eine erste Krafteinleitungsstelle 12 zwischen der ersten Baugruppe 7 und dem Lastring 14 sowie eine zweite Krafteinleitungsstelle 13 zwischen dem zweiten Lagerteil 2 und der zweiten Baugruppe 8 vertikal unmittelbar übereinander liegen und dass die Wälzkörper 4 in Kraftflussrichtung unmittelbar dazwischen liegen. Diese durch den Pfeil in der Figur angedeuteten, von oben nach unten verlaufenden Vertikalkräfte werden entsprechend der gestrichelt angedeuteten Kraftflusslinie 16 also praktisch geradlinig parallel zur Lagerachse 3 aus der oberen Baugruppe 7 in die untere Baugruppe 8 abgeleitet. Da keine nennenswerten Kraftumlenkungen stattfinden, werden hierdurch auch keine Biegemomente verursacht, so dass eine entsprechend schlanke und somit gewichtsarme Konstruktion möglich ist.

Für die Übertragung der deutlich kleineren Axialkräfte, die von unten nach oben wirken (Zugkräfte) übernimmt der Klammerring 15 eine wesentliche Kraftübertragungsfunktion. Der Klammerring 15 ist über eine kreisringförmige Kontaktfläche 21, die alternativ auch kegelstumpfförmig ausgebildet sein kann, auf dem Lastring 14 des ersten Lagerteils 1 sowie über eine Reihe von Wälzkörpern 5 auf dem zweiten Lagerteil 2 abgestützt. Die Wälzkörper 5 sind auf Laufflächen 10a, 10b geführt, die in bevorzugter Weiterbildung der Erfindung in Form von gehärteten Leisten (10b) ausgeführt sind. Der Klammerring 15 ist, damit er montierbar ist, in nicht dargestellter Weise geteilt ausgeführt. Er kann beispielsweise aus Segmenten zusammengesetzt sein. Durch einen konischen Verlauf der Kontaktfläche 21 ließe sich das Lager in axialer Richtung bei Bedarf vorspannen. Die axialen Zugkräfte werden aus der ersten Baugruppe 7 über die erste Krafteinleitungsstelle 12 in den Lastring 14 und von diesem über die Kontaktfläche 21 in den Klammerring 15 eingeleitet, der seinerseits die Kraftübertragung über die Wälzkörper 5 in das zweite Lagerteil 2 und von dort über die zweite Krafteinleitungsstelle 13 in die zweite Baugruppe 8 sicherstellt. Da die auftretenden Zugkräfte deutlich geringer sind als die auftretenden Druckkräfte, kann der hierbei eintretende und im Vergleich zur Übertragung von Druckkräften wesentlich ungünstigere Kraftflussverlauf mit mehreren Kraftumlenkungen ohne weiteres in Kauf genommen werden. Die massive Ausführung des C-förmigen Klammerrings 15 verhindert eine merkliche Aufbiegung der beiden Schenkel des "C".

Radiale Lagerkräfte werden über eine dritte Reihe von Wälzkörpern 6 übertragen, die zwischen den beiden umlaufenden Lagerflächen 11a, 11b angeordnet sind. Dabei ist die Lagerfläche 11b auf der Innenseite des C-förmigen Klammerrings 15 und die Lagerfläche 11a auf der radial innen liegenden Seite des zweiten Lagerteils 2 angebracht. Damit kein Schmutz in den Bereich der Wälzkörper 4, 5, 6 gelangen kann, ist der obere Spalt zwischen den beiden Lagerteilen 1, 2 durch eine umlaufende Dichtung 17 verschlossen.

Die erfindungsgemäße Gestaltung einer Großdrehlagerung ermöglicht eine besonders schlanke und dadurch gewichtsarme Ausführung eines Großdrehlagers, das besonders für Mobilkrane wegen der Beschränkung des zulässigen Gesamtgewichts erhebliche Vorteile mit sich bringt. Darüber hinaus ist die Materialersparnis mit einer deutlichen Kostenreduzierung verbunden.

### Bezugszeichenliste:

- 1: erstes Lagerteil
- 2: zweites Lagerteil
- 3: Lagerachse
- 4: Wälzkörper
- 5: Wälzkörper
- 6: Wälzkörper
- 7: erste Baugruppe
- 8: zweite Baugruppe
- 9a, b: Lauffläche
- 10a, b: Lauffläche
- 11a, b: umlaufende Lagerfläche
- 12: erste Krafteinleitungsstelle
- 13: zweite Krafteinleitungsstelle
- 14: Lastring
- 15: Klammerring
- 16: Kraftflusslinie
- 17: Dichtung
- 18: Verzahnung
- 19: Schweißnaht
- 20: Schweißnaht
- 21: Kontaktfläche

## Patentansprüche

1. Großdrehlagerung mit Wälzkörpern (4, 5, 6) zwischen einem ersten Lagerteil (1) und einem zweiten relativ dazu drehbaren Lagerteil (2), die jeweils mit einer ersten (7) bzw. einer zweiten Baugruppe (8) eines Großgeräts verbunden oder verbindbar sind, insbesondere zur Verbindung von Ober- und Unterwagen von Mobilkranen, Baggern, Turmdrehkranen, Ladekranen oder für Betonmischfahrzeuge und andere Großgeräte mit hohen Axiallasten und Lastmomenten quer zur Lagerachse (3), wobei an beiden Lagerteilen (1, 2) jeweils kreisförmig umlaufende Lagerflächen (9 a, b; 10 a, b), die sich jeweils zu Laufflächenpaaren ergänzen, für mindestens zwei Reihen von Wälzkörpern (4, 5) vorgesehen sind, über die parallel zur Lagerachse (3) gerichtete Kräfte übertragbar sind, und an beiden Lagerteilen (1, 2) jeweils kreisförmig umlaufende Lagerflächen (11 a, b) zur Übertragung radialer Kräfte vorgesehen sind, und wobei einer der beiden Lagerteile (1, 2) geteilt ausgeführt ist,
**dadurch gekennzeichnet,**
**dass** im Längsschnitt durch die Lagerachse (3) gesehen eine erste Krafteinleitungsstelle (12) zwischen der ersten Baugruppe (7) und dem ersten Lagerteil (1), ferner eine zweite Krafteinleitungsstelle (13) zwischen dem zweiten Lagerteil (2) und der zweiten Baugruppe (8) sowie das Laufflächenpaar (9 a, b) der einen (4) der beiden Reihen von Wälzkörpern (4, 5) im Wesentlichen auf einer Kraftflusslinie (16) parallel zur Lagerachse (3) liegen und
**dass** das geteilt ausgeführte Lagerteil (1) aus einem Lastring (14), der die erste Krafteinleitungsstelle (12) und die Lauffläche (9 a) aufweist, und einem Klammerring (15) besteht, der das zweite Lagerteil (2) formschlüssig mit dem Lastring (14) verbindet, wobei die Lauffläche (10 a) des Laufflächenpaars (10 a, b) der anderen (5) der beiden Reihen von Wälzkörpern (4, 5) an dem Klammerring (15) angeordnet ist, und dass der Klammerring (15) im axialen Längsschnitt ein massives, im Wesentlichen C-förmiges Profil aufweist.

2. Großdrehlagerung nach Anspruch 1,
**dadurch gekennzeichnet,**
**dass** die Befestigung des Lastrings (14) an der ersten Baugruppe (7) und/oder des zweiten Lagerteils (2) an der zweiten Baugruppe (8) als Schweißverbindung (19, 20) ausgeführt ist.

3. Großdrehlagerung nach einem der Ansprüche 1 - 2,
**dadurch gekennzeichnet,**
**dass** der Klammerring (15) geteilt, insbesondere aus Segmenten zusammengesetzt, ausgeführt ist.

4. Großdrehlagerung nach einem der Ansprüche 1 - 3,
**dadurch gekennzeichnet,**
**dass** die Wälzkörper (4, 5) zylindrisch oder leicht kegelstumpfförmig ausgebildet sind.

5. Großdrehlagerung nach einem der Ansprüche 1 - 4,
**dadurch gekennzeichnet,**
**dass** zumindest eine der Laufflächen (9 a, b; 10 a, b) für die Wälzkörper (4, 5) durch eingelegte gehärtete ringförmige Leisten gebildet ist.

6. Großdrehlagerung nach einem der Ansprüche 1 - 5,
**dadurch gekennzeichnet,**
**dass** zwischen den umlaufenden Lagerflächen (11 a, b) Wälzkörper (6) als radiale Führungsrollen angeordnet sind.

7. Großdrehlagerung nach einem der Ansprüche 1 - 5,
**dadurch gekennzeichnet,**
**dass** die umlaufenden Lagerflächen (11 a, b) als radiales Gleitlager ausgebildet sind.

8. Großdrehlagerung nach einem der Ansprüche 6 - 7,
**dadurch gekennzeichnet,**
**dass** eine der umlaufenden Lagerflächen (11 b) für die Übertragung radialer Kräfte an dem Klammerring (15) ausgebildet ist.

9. Großdrehlagerung nach einem der Ansprüche 1 - 8,
**dadurch gekennzeichnet,**
**dass** die Kontaktfläche (21) zur Herstellung des Formschlusses zwischen dem Klammerring (15) und dem Lastring (14) im axialen Längsschnitt gesehen leicht schräg zur Lagerachse (3) geneigt ist.

10. Großdrehlagerung nach einem der Ansprüche 1 - 9
**dadurch gekennzeichnet,**
**dass** der Klammerring (15) radial innenliegend angeordnet ist.

11. Großdrehlagerung nach einem der Ansprüche 1-10,
**dadurch gekennzeichnet,**
**dass** einer der beiden Lagerteile (1, 2) eine Außenverzahnung (18) oder Innenverzahnung für den Antrieb durch ein Zahnritzel oder eine Schnecke aufweist.

## Claims

1. Large rotary bearing with roller bodies (4, 5, 6) between a first bearing part (1) and a second bearing part (2), which is rotatable relative thereto, which bearing parts are connected or are connectable respectively to a first (7) or respectively a second assembly (8) of a large item of equipment, in particular for connecting the superstructure and substructure of mobile cranes, diggers, tower slewing cranes, loading cranes or for concrete mixer vehicles and other large items of equipment with high axial loads and load moments transversely relative to the bearing axis (3), wherein, on both bearing parts (1, 2), respectively annularly extending bearing faces (9a, b; 10a, b), which complement each other respectively to form running face pairs, are provided for at least two rows of roller bodies (4, 5), via which forces directed parallel to the bearing axis (3) are transmissible, and, on both bearing parts (1, 2), respectively annularly extending bearing faces (11a, b) are provided for transmitting radial forces, and wherein one of the two bearing parts (1, 2) is configured divided,
**characterised in that**,
in the longitudinal section observed through the bearing axis (3), a first force introducing point (12) is situated between the first assembly (7) and the first bearing part (1), in addition a second force introducing point (13) is situated between the second bearing part (2) and the second assembly (8) and also the running face pair (9a, b) of one (4) of the two rows of roller bodies (4, 5) are situated substantially on a force flow line (16) parallel to the bearing axis (3) and
**in that** the bearing part (1), which is configured separated, comprises a load ring (14), which has the first force introducing point (12) and the running face (9a), and a clamp ring (15), which connects the second bearing part (2) to the load ring (14) in a form-fitting manner, wherein the running face (10a) of the running face pair (10a, b) of the other (5) of the two rows of roller bodies (4, 5) is disposed on the clamp ring (15), and **in that** the clamp ring (15), in axial longitudinal section, has a sturdy, substantially C-shaped profile.

2. Large rotary bearing according to claim 1,
**characterised in that**
the mounting of the load ring (14) on the first assembly (7) and/or of the second bearing part (2) on the second assembly (8) is configured as a welded joint (19, 20).

3. Large rotary bearing according to one of the claims 1 - 2,
**characterised in that**
the clamp ring (15) is configured divided, in particular assembled from segments.

4. Large rotary bearing according to one of the claims 1 - 3,
**characterised in that**
the roller bodies (4, 5) have a cylindrical configuration or a slightly truncated-cone configuration.

5. Large rotary bearing according to one of the claims 1 - 4,
**characterised in that**
at least one of the running faces (9a, b; 10a, b) for the roller bodies (4, 5) is formed by inserted hardened annular strips.

6. Large rotary bearing according to one of the claims 1 - 5,
**characterised in that**
roller bodies (6) are disposed as radial guide rollers between the circumferential bearing faces (11a, b).

7. Large rotary bearing according to one of the claims 1 - 5,
**characterised in that**
the circumferential bearing faces (11a, b) are configured as a radial sliding bearing.

8. Large rotary bearing according to one of the claims 6 - 7,
**characterised in that**
one of the circumferential bearing faces (11b) for the transmission of radial forces is configured on the clamp ring (15).

9. Large rotary bearing according to one of the claims 1 - 8,
**characterised in that**
the contact face (21) for producing the form-fit between the clamp ring (15) and the load ring (14) is inclined slightly diagonally relative to the bearing axis (3), observed in axial longitudinal section.

10. Large rotary bearing according to one of the claims 1 - 9,
**characterised in that**
the clamp ring (15) is disposed radially internally.

11. Large rotary bearing according to one of the claims 1 - 10,
**characterised in that**
one of the two bearing parts (1, 2) has an external toothing (18) or internal toothing for the drive by a pinion or a worm.

## Revendications

1. Grand palier de rotation comportant des éléments de roulement (4, 5, 6) situés entre une première partie de palier (1) et une seconde partie de palier (2) pouvant tourner par rapport à la première, lesdits éléments de roulement étant chacun reliés ou pouvant chacun être reliés à un premier (7) ou un second ensemble (8) d'un gros engin, notamment pour relier le châssis tournant et le train de grues mobiles, d'excavateurs, de grues-tours, de grues de chargement ou pour des véhicules avec mélangeur de béton et autres gros engins ayant des charges axiales élevées et d'importants moments de charge transversaux par rapport à l'axe de palier (3), des surfaces de palier (9a, b ; 10a, b) à chaque fois circulaires, lesquelles se complètent à chaque fois pour former des paires de surfaces de roulement, étant prévues sur les deux parties de palier (1, 2) pour au moins deux rangées d'éléments de roulement (4, 5), par le biais desquels les forces dirigées parallèlement à l'axe de palier (3) peuvent être transmises, et des surfaces de palier (1 1a, b) à chaque fois circulaires étant prévues sur les deux parties de palier (1, 2) pour la transmission des forces radiales, et l'une des deux parties de palier (1, 2) étant réalisée en plusieurs pièces,
**caractérisé en ce que**, vu en coupe longitudinale le long de l'axe de palier (3), un premier point d'introduction de forces (12) entre le premier ensemble (7) et la première partie de palier (1), par ailleurs un second point d'introduction de forces (13) entre la seconde partie de palier (2) et le second ensemble (8) ainsi que la paire de surfaces de roulement (9a, b) de l'une (4) des deux rangées d'éléments de roulement (4, 5), sont situés essentiellement sur une ligne de flux de forces (16) parallèlement à l'axe de palier (3) et **en ce que** la partie de palier (1) réalisée en plusieurs pièces est composée d'un anneau de charge (14), qui présente le premier point d'introduction de forces (12) et la surface de roulement (9a), et d'un anneau de serrage (15), qui relie la seconde partie de palier (2) par correspondance de forme à l'anneau de charge (14), la surface de roulement (10a) de la paire de surfaces de roulement (10a, b) de l'autre (5) des deux rangées d'éléments de roulement (4, 5) étant agencée sur l'anneau de serrage (15), et **en ce que** l'anneau de serrage (15) présente, en coupe longitudinale axiale, un profil plein essentiellement en forme de C.

2. Grand palier de rotation selon la revendication 1, **caractérisé en ce que** la fixation de l'anneau de charge (14) sur le premier ensemble (7) et/ou de la seconde partie de palier (2) sur le second ensemble (8) est réalisée sous forme de liaison soudée (19, 20).

3. Grand palier de rotation selon l'une des revendications 1 ou 2, **caractérisé en ce que** l'anneau de serrage (15) est réalisé en plusieurs pièces, notamment composé de segments.

4. Grand palier de rotation selon l'une des revendications 1 à 3, **caractérisé en ce que** les éléments de roulement (4, 5) sont cylindriques ou légèrement tronconiques.

5. Grand palier de rotation selon l'une des revendications 1 à 4, **caractérisé en ce qu'**au moins l'une des surfaces de roulement (9a, b ; 10a, b) pour les éléments de roulement (4, 5) est formée par des baguettes annulaires trempées et insérées.

6. Grand palier de rotation selon l'une des revendications 1 à 5, **caractérisé en ce que** des éléments de roulement (6) réalisés sous forme de galets de guidage radiaux sont agencés entre les surfaces de palier (11a, b) circulaires.

7. Grand palier de rotation selon l'une des revendications 1 à 5, **caractérisé en ce que** les surfaces de palier (11a, b) circulaires sont réalisées sous forme de paliers lisses radiaux.

8. Grand palier de rotation selon l'une des revendications 6 à 7, **caractérisé en ce que** l'une des surfaces de palier (11b) circulaires est réalisée sur l'anneau de serrage (15) pour la transmission des forces radiales.

9. Grand palier de rotation selon l'une des revendications 1 à 8, **caractérisé en ce que**, vu en coupe longitudinale axiale, la surface de contact (21) servant à réaliser la liaison par correspondance de forme entre l'anneau de serrage (15) et l'anneau de charge (14) est légèrement inclinée de manière oblique par rapport à l'axe de palier (3).

10. Grand palier de rotation selon l'une des revendications 1 à 9, **caractérisé en ce que** l'anneau de serrage (15) est agencé radialement à l'intérieur.

11. Grand palier de rotation selon l'une des revendications 1 à 10, **caractérisé en ce que** l'une des deux parties de palier (1, 2) présente une denture extérieure (18) ou une denture intérieure pour l'entraînement par un pignon ou une vis sans fin.
